# EUROPÄISCHE PATENTSCHRIFT

(11) **EP 3 750 011 B1**
(45) Veröffentlichungstag und Bekanntmachung des Hinweises auf die Patenterteilung: **07.05.2025**
(21) Anmeldenummer: 19713691.4
(22) Anmeldetag: 04.02.2019
(51) Int. Cl.: G05B 13/04

(54) **VERFAHREN ZUM OPTIMIERTEN BETRIEB EINES VENTILATORS ODER EINER VENTILATOR-ANORDNUNG**
METHOD FOR OPTIMIZED OPERATION OF A FAN OR A FAN ASSEMBLY
PROCÉDÉ DE FONCTIONNEMENT OPTIMISÉ D'UN VENTILATEUR OU D'UN ENSEMBLE DE VENTILATEURS

(30) Priorität: 05.02.2018 DE 102018201709
(43) Veröffentlichungstag der Anmeldung: 16.12.2020
(73) Patentinhaber: ZIEHL-ABEGG SE, 74653 Künzelsau (DE)
(72) Erfinder: WENGER, Bjoern, 74575 Schrozberg (DE)
(74) Vertreter: Ullrich & Naumann PartG mbB
(86) Internationale Anmeldenummer: PCT/DE2019/200009
(87) Internationale Veröffentlichungsnummer: WO 2019/149326

(56) Entgegenhaltungen:
- EP-A1- 1 669 226
- DE-A1- 102015 118 289
- US-A1- 2012 060 505
- US-A1- 2016 333 854
- US-A1- 2017 323 274

## Beschreibung

### 1. digitaler Zwilling und Zwillings-Algorithmus

Hier liegt die grundsätzliche Idee zugrunde, in jedem Betriebspunkt des Ventilators den bestmöglichen Wirkungsgrad und die bestmögliche Laufperformance zu gewährleisten. Aufgrund gegenläufiger Betriebsparameter ist dies schwierig.

Aus der Praxis eines Ventilators ist es bekannt, dass das Kugellager und das Kugellagerfett kritische Parameter für die Lebensdauer des Ventilators sind. Die Lebensdauer des Kugellagers und des Kugellagerfetts hängt maßgeblich von der Betriebstemperatur im bzw. am Motor und den auf das Kugellager wirkenden mechanischen Kräften ab. Da in unmittelbarer Nähe des Lagers weder Temperatursensoren noch Kraftsensoren positionierbar sind, lassen sich weder die Lagertemperatur noch auf das Lager wirkende Lagerkräfte messen. Folglich ist es erforderlich, diese Parameter entweder indirekt zu messen oder rechnerisch zu ermitteln.

Aus DE 10 2010 002 294 A1 ist ein System bzw. Verfahren zur Ermittlung des Zustands des Lagers einer elektrischen Maschine bekannt. Reale Sensoreinheiten ermitteln einen Messwert der an eine Simulationseinheit übermittelt wird. Mittels der Simulationseinheit wird ein Ergebniswert ermittelt, der entweder ein Lagerstrom-Wert oder ein vom Lagerstrom abhängiger Wert ist. Der Ergebniswert wird zur weiteren Berechnung einer weiteren Einheit übermittelt. Das bekannte System/ Verfahren ist aufgrund der erforderlichen Sensorik aufwändig und lässt sich bei Ventilatoren in Ermangelung eines hinreichenden Bauraumes nur schwer anwenden.

Das Dokument EP 1 669 226 A1 offenbart ein modellbasiertes Verfahren zur Regelung einer Klimaanlage eines Kraftfahrzeugs. Des Weiteren zeigt das Dokument US 2017/323274 A1 ein Verfahren zum Regeln eines Flugzeugs und dessen Antriebskomponenten. Das Dokument US 2016/333854 A1 offenbart eine Nutzerschnittstelle für den Betrieb eines Windparks. Aus US 2012/060505 A1 ist ein Verfahren zum Betreiben einer Gasturbine vorbekannt.

Dem digitalen Zwilling und Zwillings-Algorithmus liegt die Schaffung eines digitalen Abbilds eines realen Ventilators zugrunde, nämlich durch Abbildung dessen Eigenschaften mittels mathematischer Berechnungsmodelle und gegebenenfalls unter Hinzuziehung bekannter Daten, ggf. realer Messdaten. Bei den realen Messdaten kann es sich um aktuelle Messdaten aus dem laufenden Betrieb jedes individuellen Motors (und ggf. seiner Historie) handeln. Des Weiteren wird mindestens ein betriebsparameterspezifischer Algorithmus unter Berücksichtigung bekannter Zusammenhänge, Kennlinien, etc. geschaffen und zur weiteren Berechnung hinzugezogen.

Es werden Bauteilzustände des Ventilators über das digitale Abbild mittels virtueller Sensoren ermittelt bzw. berechnet. Diese Bauteilzustände werden dem betriebs- oder betriebsparameterspezifischen oder produktspezifischen Algorithmus zugeführt, der aus den Bauteilzuständen konkrete Betriebsparameter des Ventilators ermittelt oder berechnet und gegebenenfalls, davon abgeleitet, den Betrieb des Ventilators betreffende Prognosen liefert, beispielsweise Prognosen zur Lebensdauer des Ventilators. Wesentlich ist, dass die kombinierte Nutzung ermittelter Bauteilzustände und realer Messdaten möglich ist.

Dabei werden zwei unterschiedliche Softwarekomponenten genutzt, nämlich eine erste Softwarekomponente betreffend den digitalen Zwilling und eine zweite Softwarekomponente betreffend den betriebsparameterspezifischen Algorithmus, den man als "intelligenten" Algorithmus bezeichnen kann.

Der digitale Zwilling ist ein digitales Abbild eines realen, individuellen Objekts, im Falle der erfindungsgemäßen Lehre eines Ventilators oder eines Ventilatorsystems. Der digitale Zwilling bildet die Eigenschaften des Ventilators mittels Berechnungsmodell und gegebenenfalls unter Hinzuziehung bekannter Daten des Ventilators ab. Die Aufgabe des digitalen Zwillings ist darin zu sehen, Bauteilzustände der Bauteile des Ventilators in Abhängigkeit des jeweiligen Betriebszustandes mit virtuellen Sensoren zu berechnen. Die auf Grundlage einer solchen Berechnung ermittelten Bauteilzustände werden an den betriebsparameterspezifischen Algorithmus übermittelt, der aus den Betriebsdaten des digitalen Zwillings Betriebsparameter oder Betriebszustände des Ventilators ermittelt/berechnet, beispielsweise die Lagerlebensdauer und/oder die Lagerfettlebensdauer. Aufgrund des Ergebnisses ist eine situationsgerechte Regelanpassung möglich. Betriebsparameter und Betriebszustände sind insoweit gleichermaßen relevant, als diese berechenbare Größen sind.

Die zuvor erörterte Kombination von digitalem Zwilling und betriebsparameterspezifischem Algorithmus lässt sich im Sinne eines digitalen Zwillingsalgorithmus auf einem dem Motor des Ventilators zuzuordnenden Mikroprozessor realisieren und somit dem Ventilator als festen Bestandteil zuordnen.

Der digitale Zwillingsalgorithmus ist die Kombination eines den Ventilator beschreibenden digitalen Zwillings mit einer Art intelligentem Algorithmus, der betriebsparameterspezifisch ausgelegt ist.

Mit einem entsprechend ausgestalteten Ventilator lässt sich eine vorausschauende Instandhaltung betreiben, mit dem Ziel, einen Ventilatorausfall beispielsweise aufgrund eines schadhaften Lagers oder Lagerfetts zu vermeiden. Es wird eine situationsgerechte Anpassung der Systemparameter angestrebt, um nahezu die maximal mögliche Lebensdauer des Ventilators realisieren zu können.

Unter Nutzung eines digitalen Abbilds des Ventilators und betriebsparameterspezifischer Algorithmen wird im Rahmen der vorausschauenden Instandhaltung angestrebt, die Lebensdauer der Bauteile des Ventilators möglichst komplett auszuschöpfen und gleichzeitig jeglichen Ausfall des Ventilators zu vermeiden. Die Lebensdauer des Ventilators wird unter Zugrundelegung berechneter Bauteilzustände und daraus resultierender Betriebsparameter berechnet.

Der digitale Zwilling nutzt physikalische und/oder mathematische und/oder statistische und/oder empirische und/oder kombinierte Modelle, um thermische und mechanische Bauteilzustände zu berechnen. Sowohl mathematische als auch physikalische und nicht-physikalische Modelle gehören jedenfalls dazu. Der betriebsparameterspezifische Algorithmus (intelligenter Algorithmus) benötigt die vom digitalen Zwilling ermittelten Bauteilzustände, um beliebige Betriebsparameter zu ermitteln, beispielsweise auch um den Ventilatorausfall zu prognostizieren. Da die Lebensdauer eines Ventilators in erster Linie von den Kugellagern und dem Kugellagerfett abhängt, spielt die auf das Kugellagerfett und das Kugellager fokussierte Betriebsparameterberechnung eine ganz besondere Rolle.

Es ist aus der Praxis bekannt, dass die Lebensdauer von Lagerfett maßgeblich von der Betriebstemperatur abhängt. Je höher die Betriebstemperatur über die gesamte Lebensdauer ist, umso schneller wird das Lagerfett aufgebraucht. Folglich gilt es die Lagertemperatur zu ermitteln, um die Lagerfettlebensdauer zu bestimmen.

Zur Ermittlung der Lagertemperatur müsste ein Temperatursensor in unmittelbarer Umgebung des Lagers positioniert werden. Dies ist aufgrund der geometrischen und funktionellen Gegebenheiten des Ventilators/Motors nicht möglich. Entsprechend werden in erfindungsgemäßer Weise solche Bauteilzustände, wie die Lagertemperatur, über den digitalen Zwilling nebst betriebsparameterspezifischem Algorithmus berechnet.

Die Berechnung basiert auf einem mathematischen Modell, welches wiederrum auf einem reduzierten gekoppelten thermomagnetischen Berechnungsmodell basiert. Die Kombination aus digitalem Zwilling nebst betriebsparameterspezifischem Algorithmus berechnet Wärmequellen, Wärmesenken und den thermischen Zustand des den Motor des Ventilators betreffenden Gesamtsystems. So lässt sich über die virtuellen Sensoren des digitalen Zwillings die Lagerfetttemperatur in Abhängigkeit vom Betriebszustand des Ventilators/Motors bestimmen und in den betriebsparameterspezifischen Algorithmus als Betriebszustand einspeisen.

Sowohl der digitale Zwilling inklusive seiner virtuellen Sensoren als auch der betriebsparameterspezifische Algorithmus lässt sich im Maschinen-Code (C-Code) auf den bereits vorhandenen Mikroprozessor implementieren, wodurch dem Ventilator eine gewisse Maschinenintelligenz einverleibt wird.

Voranstehende Ausführungen beschreiben ein Verfahren zur Ermittlung von Betriebszuständen eines Ventilators unter Nutzung eines digitalen Abbildes (digitaler Zwilling) des Ventilators unter Hinzunahme mindestens eines betriebsparameterspezifischen Algorithmus. Dies ist Grundlage für die nachfolgenden Verfahrensschritte, Betriebszustände, die mit virtuellen Sensoren bestimmt werden, unter Zugrundelegung eines digitalen Zwillings-Algorithmus zu berechnen, wobei zur Realisierung des digitalen Zwillings-Algorithmus in Bezug auf den Ventilator ein Workflow definiert wird. Insbesondere gilt es, reale Sensoren zur Ermittlung von Betriebszuständen einzusparen.

### 2. intelligenter Ventilator

Durch ein Verfahren zur Optimierung des Wirkungsgrads und/oder der Laufperformance eines Ventilators wird ein quasi "intelligenter" Ventilator geschaffen, wobei ausgehend von bauteil- oder funktionsspezifischen numerischen Detailmodellen, unter Zugrundelegung mindestens eines Algorithmus, eine Modell- und somit Datenreduktion (Datenveredelung) zu bauteil- oder funktionsspezifischen Verhaltensmodellen erfolgt, wobei die reduzierten Daten der Verhaltensmodelle in einer Systemsimulation zu einem System-Verhaltensmodell mit Eingangs- und Ausgangsgrößen gekoppelt bzw. kombiniert werden und wobei die Eingangsgrößen und zugehörigen Ausgangsgrößen des Ventilators aus dem System-Verhaltensmodell einem Optimierer zur Auswahl zur Verfügung gestellt werden, um in Abhängigkeit von Rahmenbedingungen eine optimierte Regelung des Systems zu erzielen.

Dabei geht es um den digitalen Zwillings-Algorithmus im Kontext mit einem "intelligenten" Ventilator im Sinne einer Weiterentwicklung des Zwillings-Algorithmus gemäß Ziffer 1.

Die weitere Entwicklung des digitalen Zwillings-Algorithmus ist als eigenständige situationsgerechte Anpassung der Systemparameter des Ventilators bzw. des Ventilatorsystems zu verstehen, um in jedem Betriebspunkt den bestmöglichen Wirkungsgrad und die bestmögliche Laufperformance zu gewährleisten.

Es werden zunächst numerische Detailmodelle erstellt, beispielsweise betreffend ein thermisches Modell, ein Magnetkreismodell oder ein Modell betreffend die Flügelstellung und die Strömung bzw. Strömungsverhältnisse. Bei dem Detailmodell kann es ebenso um einen digitalen Zwilling entsprechend der einleitenden Erörterung in Bezug auf eine Ventilatorumgebung, beispielsweise ein Data-Center im Sinne eines Gesamtsystems, gehen. Auch kann das Detailmodell den digitalen Zwilling einer Ventilatoranordnung betreffen. Weitere Detailmodelle sind denkbar.

In einem nächsten Schritt findet die Reduktion der Detailmodelle im Rahmen einer Modellreduktion statt, nämlich zu sogenannten Verhaltensmodellen. Dies geht einher mit einer nicht unerheblichen Reduktion der anfallenden Daten.

Danach findet in der Systemsimulation eine Kopplung der reduzierte Daten aufweisenden Verhaltensmodelle statt, resultierend in eine Verhaltensstudie mit einem kombinierten Verhaltensmodell.

Die Simulation des Gesamtsystems erfolgt im Systemraum mit einer homogen verteilten Eingangsgrößenkombination. Das Ergebnis ist eine Tabelle mit den Eingangskombinationen und dazugehörenden Systemausgangsgrößen. Die Tabelle spiegelt ein Systemverhaltensmodell wieder, nämlich mit Eingangsgrößen und dazugehörenden Ausgangsgrößen des Ventilators. Anhand dieser Größen kann eine Optimierung stattfinden.

Im laufenden Betrieb sucht ein Optimierer in Abhängigkeit von Umgebungsbedingungen die bestmöglichen Systemausgangsgrößen wie zum Beispiel den Systemwirkungsgrad in der Tabelle des Verhaltensmodells vorzugsweise in Echtzeit aus. Sobald die bestmögliche Systemausgangsgröße gefunden ist, können die dazugehörenden Eingangsgrößen aus der Tabelle gelesen werden. Mit diesen Eingangsgrößen wird das System bestmöglich geregelt, und zwar vorzugsweise in Echtzeit.

Im Lichte der voranstehenden Ausführungen ist wesentlich, dass der Optimierer den optimalen Systemwirkungsgrad aus der Systemverhaltenstabelle aussucht und dem Regelsystem die notwendigen Eingangsgrößen liefert. So ist eine ständige Optimierung möglich.

### 3. erfindungsgemäße Optimierung

Der vorliegenden Erfindung liegt unter Zugrundelegung des digitalen Zwillings nebst Zwillings-Algorithmus und einer Optimierung des Wirkungsgrads und/oder der Laufperformance eines Ventilators, unter Nutzung eines "intelligenten" Ventilators, die Aufgabe zugrunde, einerseits eine stetige Verbesserung des digitalen Zwillings-Algorithmus und andererseits verbesserte Produkte (Ventilatoren) durch Produktinnovation zu generieren, nämlich unter Nutzung berechneter Betriebszustände.

Voranstehende Aufgabe ist durch die Merkmale des Anspruchs 1 gelöst.

Grundlage für das erfindungsgemäße Verfahren ist die Nutzung eines digitalen Zwillings und des dort genutzten Zwillings-Algorithmus entsprechend der einleitenden Erörterung zu den Ziffern 1 und 2.

Durch eine Innovations-Analyse einerseits und eine Algorithmen-Analyse andererseits wird eine ständige Verbesserung des digitalen Zwillings-Algorithmus und werden neue Produktinnovationen generiert.

Ausgangspunkt für das erfindungsgemäße Verfahren ist der digitale Zwillings-Algorithmus, der Betriebszustände des Ventilators im Betrieb, d.h. vor Ort beim Kunden, berechnet. Diese Betriebszustände werden zur Analyse und danach zur Weiterverarbeitung in die Cloud gesendet. Die Analyse nutzt in vorteilhafter Weise ein besonderes Tool, nämlich eine Programmeinheit zum maschinellen Lernen in der Cloud. Unter "maschinellem Lernen" ist die künstliche Generierung von Wissen aus Erfahrung zu verstehen.

Ein solches künstliches System lernt aus Beispielen der berechneten Betriebszustände gemäß digitalem Zwillings-Algorithmus und kann diese nach Beendigung der eigentlichen Lernphase verallgemeinern. Ein solches System erkennt Muster und Gesetzmäßigkeiten in den Lerndaten anhand der berechneten Betriebszustände.

Im Lichte der voranstehenden Ausführungen lassen sich Produktinnovationen und Verbesserungen von Algorithmen vornehmen.

Des Weiteren ist wesentlich, dass die Berechnung und Aufzeichnung von Bauteilzuständen zur Gewinnung neuer Erkenntnisse dient, insbesondere bei der Gestaltung neuer Produkte. Es erfolgt ein ständiger digitaler Know-how-Zuwachs.

Auch lässt sich durch die Innovations-Analyse bestimmen, was der Kunde in Bezug auf den Ventilator tatsächlich benötigt, und dies unter Zugrundelegung eines konkreten Anspruchsprofils. So entstehen neue Innovationen durch individuell auf den Kunden angepasste Ventilator-Produkte.

Die Innovations-Analyse liefert ein "Feedback to Design" durch Analyse von Smart Data, wie sie gemäß Ziffer 2. der einleitenden Erörterung durch Modellreduktion entstehen.

Bestehende bzw. verbesserte Algorithmen können zur Berechnung der Lebensdauer oder zur Optimierung der Performance des Ventilators benutzt und im Verlaufe der Analyse verbessert werden. Die verbesserten Algorithmen machen den Ventilator "intelligent" und ermöglichen eine bestmögliche Prognose für die Wartung. Dies ist von ganz besonderer Bedeutung.

Letztendlich gehen die verbesserten Algorithmen und die neuen Produktinnovationen in die Entwicklung neuer Ventilator-Produkte ein und führen obendrein zu einer steten Verbesserung der digitalen Zwillings-Algorithmen.

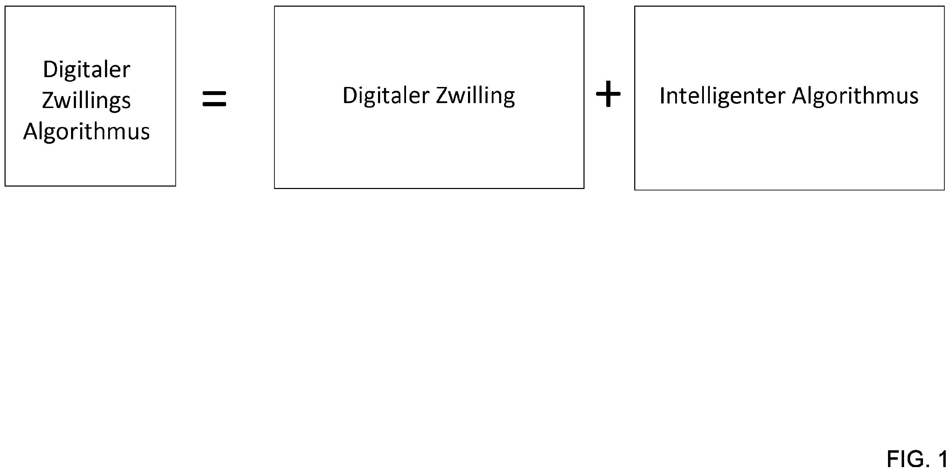

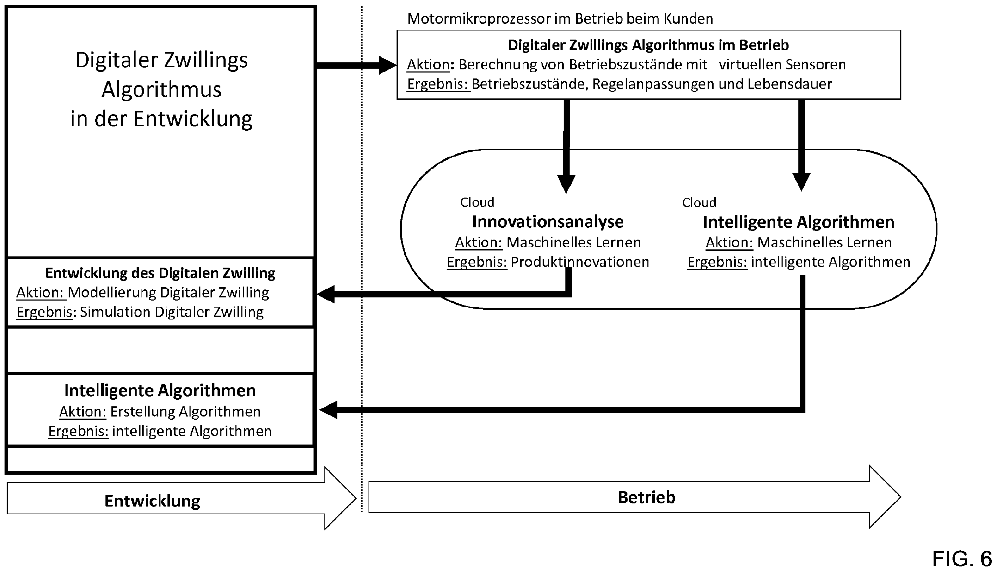

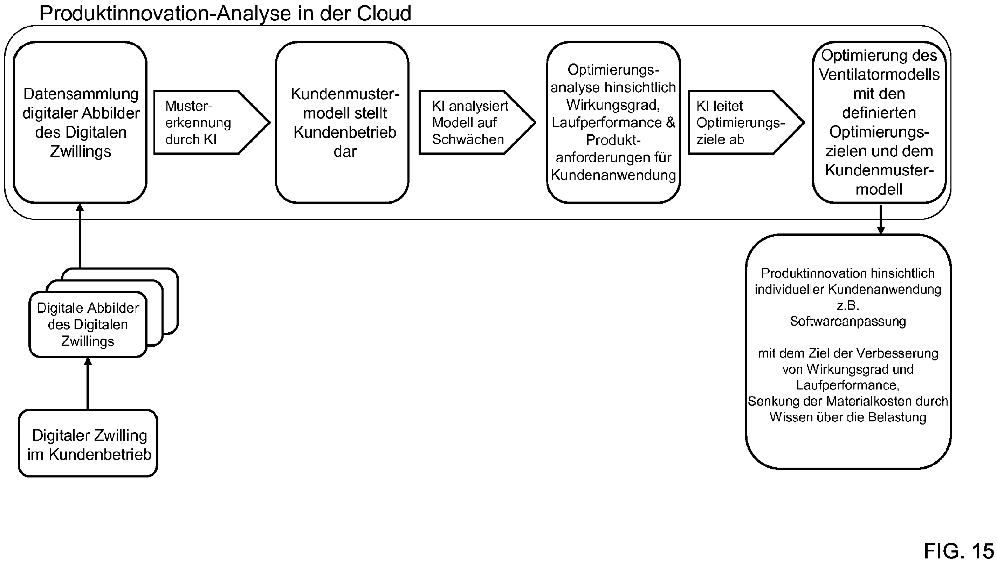

Es gibt verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1 bis 16: Verfahrensschritte zur Realisierung der erfindungsgemäßen Lehre mit besonderen Ausprägungen, wobei die erfindungs gemäße Lehre beispielhaft anhand von Figur 6 erläutert wird.

Die Figuren 1 bis 5 dienen zum Verständnis der erfindungsgemäßen Lehre und beziehen sich auf den digitalen Zwilling und den digitalen Zwillings-Algorithmus als Grundlage für den intelligenten Ventilator.

Im Konkreten zeigt **Figur 1** die Kombination des digitalen Zwillings mit mindestens einem betriebsparameterspezifischen Algorithmus, die nachfolgend als digitaler Zwillingsalgorithmus bezeichnet wird. Dies lässt sich am Beispiel für die Lebensdauer des Lagerfetts und/oder des Lagers erörtern.

Wie bereits zuvor ausgeführt, hängt die Lebensdauer von Lagerfett und Lager von der Betriebstemperatur und der Drehzahl des Motors ab. Da kein Temperatursensor in unmittelbarer Umgebung des Lagers positionierbar ist, muss die Lagertemperatur mittels Modell berechnet werden, erfindungsgemäß mit dem digitalen Zwillingsalgorithmus, der sich aus einer Kombination von digitalem Zwilling und einem betriebsparameterspezifischen Algorithmus (intelligenter Algorithmus) ergibt.

Der digitale Zwilling ist nichts anders als ein mathematisches Modell, welches auf einem reduzierten gekoppelten thermomagnetischen und mechanischen Berechnungsmodell aufbaut. Der digitale Zwilling berechnet den thermischen und mechanischen Zustand des den Motor betreffenden Gesamtsystems. Durch die zum digitalen Zwilling gehörenden virtuellen Sensoren kann der digitale Zwilling die Lagerfetttemperatur in Abhängigkeit des Betriebszustands des Motors ermitteln.

Der intelligente Algorithmus benötigt zur Weiterverarbeitung der Daten die Bauteilzustände, um beispielsweise den Ventilatorausfall zu prognostizieren. Anhand von Ausfallkennlinien lässt sich das Versagen des Motors berechnen, zumindest aber abschätzen. Die gesamte den digitalen Zwillingsalgorithmus betreffende Software ist im Maschinen-Code (C-Code) auf dem Motormikroprozessor realisiert, so dass keine weitere Elektronik erforderlich ist.

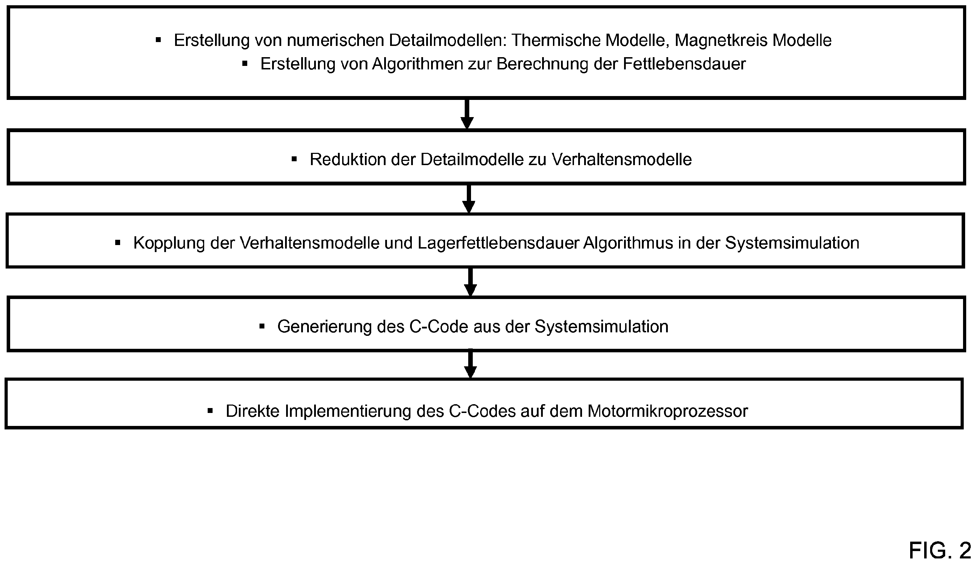

**Figur 2** zeigt den Ablauf der Lagerfettlebensdauerberechnung des Lagerfetts im Lager eines Ventilatormotors. Im Rahmen der Schaffung des digitalen Abbilds des realen Ventilators sind numerische Detailmodelle, im Konkreten thermische Modelle, Magnetkreismodelle, etc. erforderlich. Außerdem werden Algorithmen zur Berechnung der Fettlebensdauer erstellt.

Die Detailmodelle werden anschließend zu Verhaltensmodellen reduziert, damit das Datenvolumen handhabbar ist.

Anschließend findet eine Kopplung der Verhaltensmodelle und des die Lagerfettlebensdauer berechnenden Algorithmus in einer Systemsimulation statt, nämlich im Rahmen einer Kombination des digitalen Zwillings mit dem betriebsparameterspezifischen Algorithmus, der im vorliegenden Falle die Lagerfettlebensdauer berechnet. Aus der Systemsimulation wird der C-Code generiert und es findet eine direkte Implementierung des C-Codes auf dem Motormikroprozessor statt.

Wie bereits zuvor ausgeführt, ist die Modellreduktion des Detailmodells auf ein Verhaltensmodell erforderlich, um die Rechenzeit zu senken. Aufgrund dieser Maßnahme kann der digitale Zwillingsalgorithmus auf den Mikroprozessor des Motors realisiert werden. Für die thermische Modellreduktion lassen sich verschiedene Verfahren anwenden, beispielsweise das Verfahren nach Krylow. Dabei werden die Daten des Detailmodells durch Verringerung der Modellordnung reduziert.

Das magnetische Detailmodell kann durch einen Algorithmus oder durch eine Tabelle reduziert werden. In der Tabelle sind für bestimmte Konstellationen vorberechnete Ergebnisse definiert, so dass sich komplexe Berechnungen durch eine schnelle Wertsuche ersetzen lassen. Mit den entsprechend reduzierten Modellen kann die Lagerfetttemperatur und die Lagertemperatur berechnet werden. Die berechneten Werte nutzen den betriebsparameterspezifischen Algorithmus, hier den die Lagerfettlebensdauer berechnenden Algorithmus, um die Lebensdauer einerseits des Lagerfetts und andererseits des Lagers zu berechnen.

Außerdem ist es möglich, die verbrauchte Lebensdauer des Lagers/des Lagerfetts je nach Betriebstemperatur vorzugsweise exponentiell zu gewichten.

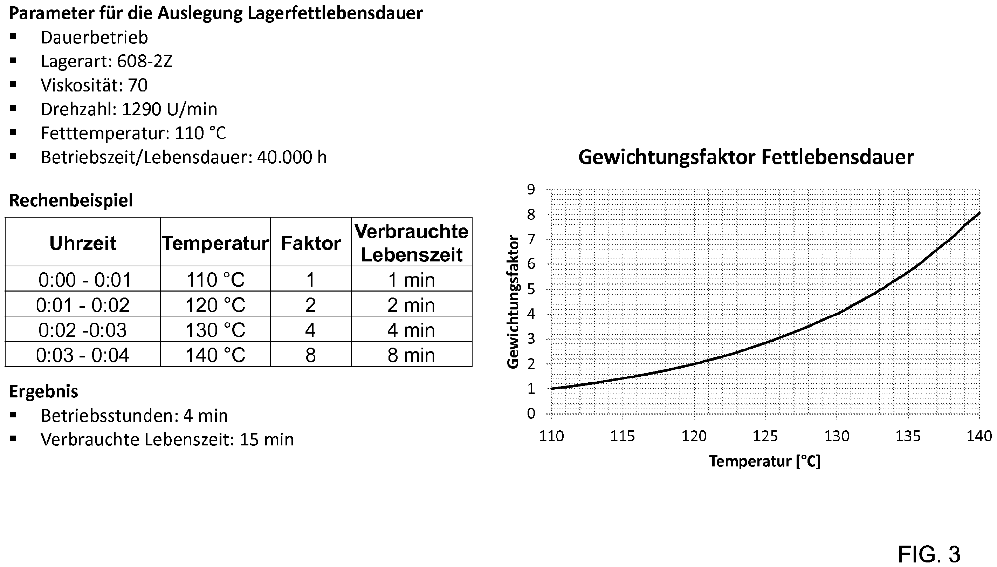

**Figur** 3 zeigt den Verlauf eines solchen Gewichtungsfaktors über den Temperaturverlauf hinweg, wobei zur Lagerfettlebensdauerberechnung beispielhafte Parameter wie Dauerbetrieb, Lagerart, Viskosität, Drehzahl, Fetttemperatur und Betriebszeit/Lebensdauer zugrunde gelegt werden. Das Rechenbeispiel ergibt bei einer Betriebsdauer von vier Minuten eine verbrauchte Lebenszeit von 15 Minuten.

Es werden die reduzierten Modelle gemäß digitalem Zwilling und der betriebsparameterspezifische Algorithmus betreffend die Lagerfettlebensdauer in eine Systemsimulation eingebunden und miteinander verknüpft. Die Systemsimulation kann beispielsweise im Programm MATLAB erstellt werden. Mit dem Code-Generator von MATLAB ist es möglich, die Systemsimulation in den C-Code zu übersetzen und auf dem Motormikroprozessor zu implementieren.

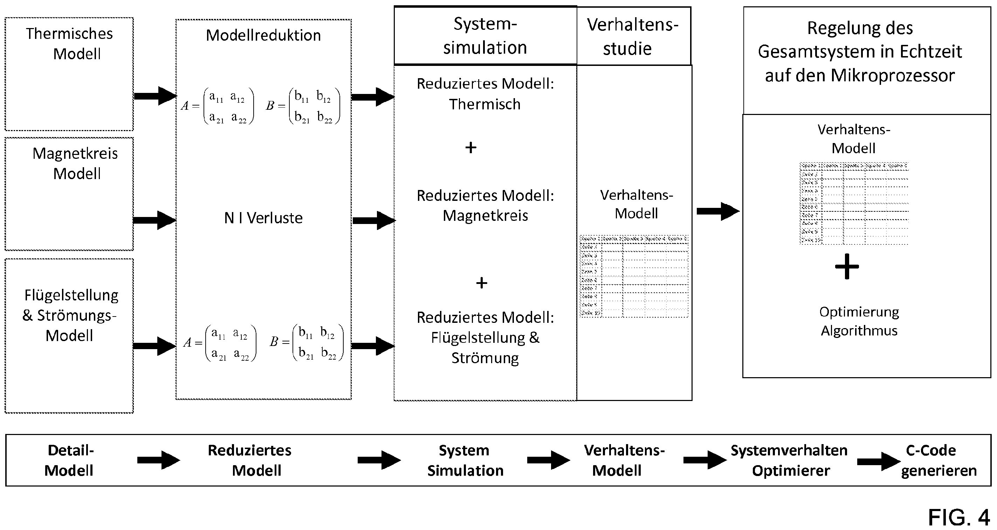

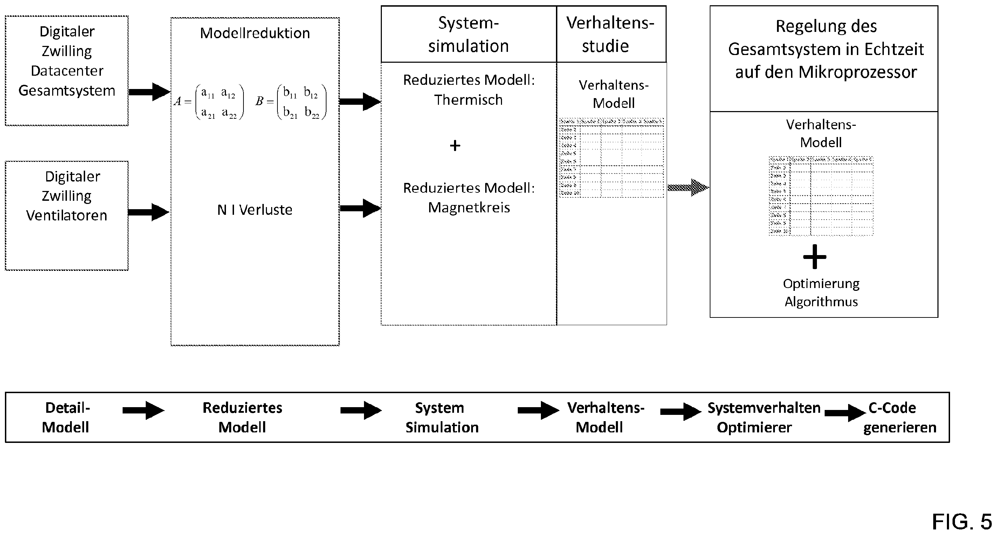

Die **Figuren 4** **und** **5** zeigen die einzelnen Schritte des die Schaffung des "intelligenten" Ventilators betreffenden Verfahrens, wobei sich Figur 4 auf die Stellung des Flügelwinkels und Figur 5 auf die Lastverteilung von Ventilatoren eines Data-Centers bezieht. Die jeweiligen Verfahrensschritte von der Schaffung bzw. Bereitstellung eines Detailmodells über ein reduziertes Modell, eine Systemsimulation bis hin zu einem Verhaltensmodell sind in beiden Fällen identisch. Unter Zugrundelegung des Verhaltensmodells sucht der Optimierer den optimalen Systemwirkungsgrad aus der Systemverhaltenstabelle aus und übergibt die korrespondierenden Eingangsgrößen an den Regler, wobei eine Regelung in Echtzeit erfolgt. Die Prozedur nebst Daten werden im C-Code generiert, so dass die Optimierung auf einem üblichen Prozessor laufen kann.

Gemäß der Darstellung in Figur 4 ist der Winkel der Flügelstellung der Flügel des Ventilators so zu regeln, dass ein optimaler Systemwirkungsgrad je nach Betriebspunkt entsteht. Aus dem Detailmodell wird unter Zugrundelegung eines geeigneten Algorithmus ein reduziertes Modell abgeleitet, woraus im Rahmen einer Systemsimulation, unter Zugrundelegung mehrerer Detailmodelle, eine Verhaltensstudie bzw. ein daraus resultierendes Verhaltensmodell entsteht. Der Optimierer sucht den optimalen Systemwirkungsgrad aus der Systemverhaltenstabelle aus und übergibt die korrespondierenden Eingangsgrößen, mit denen sich die Optimierung erreichen lässt, dem Regelmechanismus. Es findet eine Regelung des Gesamtsystems in Echtzeit auf einem Mikroprozessor statt, nämlich unter Zugrundelegung des Verhaltensmodells und des zur Optimierung dienenden Algorithmus. Die Daten und der Algorithmus über die Programmierung liegen im C-Code vor.

Gemäß der Darstellung in Figur 5 geht es um die Lastverteilung von einer Anordnung mehrerer Ventilatoren, bei dem gewählten Ausführungsbeispiel um die Lastverteilung von Ventilatoren eines Data-Centers. Die Strömungsgeschwindigkeit und die dadurch notwendige Lastverteilung einzelner Ventilatoren ist so zu regeln, dass ein optimaler Systemwirkungsgrad je nach der herrschenden Temperatur im Data-Center entsteht. Der Optimierer sucht auch hier den optimalen Systemwirkungsgrad aus der Systemverhaltenstabelle und übergibt dem Regelmechanismus die korrespondierenden Eingangsgrößen, so dass eine Regelung des Gesamtsystems in Echtzeit auf einem Mikroprozessor erfolgen kann. Auch hier werden die Daten des Verhaltensmodells dem zur Optimierung dienenden Algorithmus zugeführt, wobei das Programm im C-Code auf üblichen Prozessoren läuft.

Das Verfahren ermöglicht unter Zugrundelegung der zuvor erörterten Datenreduktion einen kompakten C-Code zu erstellen, der auf Standardmikroprozessoren betrieben werden kann. Auf dem Mikroprozessor findet eine Art Datenveredelung (Big Data → Smart Data) statt, wobei dies das Berechnungsergebnis ist. Nur die komprimierten veredelten Daten werden weiterverarbeitet oder beispielsweise in eine Cloud versendet. Es ist selbstredend, dass sich dadurch das Streamingvolumen der Verbindung in die Cloud ganz erheblich reduziert.

Weiter lassen sich die bei digitalem Zwilling und betriebsparameterspezifischem Algorithmus ermittelten Betriebsparameter zur vorausschauenden Instandhaltung und zur Instandhaltung eines Ventilators einerseits und zur Optimierung der Konstruktion und des Betriebs eines Ventilators andererseits verwenden, wobei der digitale Zwillings-Algorithmus zur eigenständigen situationsgerechten Anpassung der Systemparameter weiterentwickelt wird, um nämlich in jedem Betriebspunkt den bestmöglichen Wirkungsgrad und die bestmögliche Laufperformance zu gewähr-leisten.

**Figur 6** zeigt schematisch den Ablauf des erfindungsgemäßen Verfahrens, wobei der digitale Zwillings-Algorithmus im Betrieb des Ventilators im dortigen Motormikroprozessor läuft. Betriebszustände werden mit virtuellen Sensoren berechnet. Aufgrund der Betriebszustände ist eine Regelanpassung und die Berechnung der Ventilator-Lebensdauer möglich.

Die Daten werden vom Motormikroprozessor aus in die Cloud übergeben, einerseits zur Innovations-Analyse und andererseits zur Algorithmus-Analyse.

Im Bereich der Innovations-Analyse erfolgt ein maschinelles Lernen mit dem Ergebnis ständiger Produktinnovationen.

Im Bereich der Algorithmen-Analyse erfolgt ebenfalls ein maschinelles Lernen mit dem Ergebnis zunehmend intelligenterer Algorithmen.

Die Ergebnisse beider Analysen - Innovations-Analyse und Algorithmen-Analyse - werden zu Verbesserung des digitalen Zwillings und des digitalen Zwillings-Algorithmus rückgekoppelt, mit dem Ziel "intelligenter" Algorithmen und zur Schaffung "intelligenter" Ventilatoren.

Für die erfindungsgemäße Lehre ist im Rahmen einer besonderen Ausprägung, entsprechend den Merkmalen des Anspruchs 5, von besonderer Bedeutung, dass Muster und Gesetzmäßigkeiten erkannt werden. In Ergänzung zu den voranstehenden Ausführungen lässt sich dazu folgendes festhalten:
"Artificial Intelligence" oder künstliche Intelligenz ist der Oberbegriff zur Beschreibung aller Forschungsgebiete, die sich mit der Erbringung menschlicher Intelligenzleistungen durch Maschinen beschäftigen. Ein Teilgebiet der künstlichen Intelligenz ist das "Machine Learning" oder maschinelles Lernen, wonach Maschinen die Möglichkeit erhalten, "Wissen" aus Erfahrung zu generieren, mit anderen Worten zu lernen. "Deep Learning" mit künstlichen neuronalen Netzen ist eine besonders effiziente Methode des permanenten maschinellen Lernens auf der Basis statistischer Analyse großer Datenmengen und daher bedeutendste Zukunftstechnologie innerhalb der künstlichen Intelligenz.

"Deep Learning" ist eine Lernmethode im Rahmen maschinellen Lernens. Unter Verwendung neuronaler Netze versetzt sich die Maschine selbst in die Lage, Strukturen zu erkennen, diese Erkennung zu evaluieren und sich in mehreren vorwärts wie rückwärts gerichteten Durchläufen selbständig zu verbessern bzw. zu optimieren.

Die künstlichen neuronalen Netze sind zu diesem Zweck in mehrere Schichten geteilt. Diese wirken wie ein gewichteter Filter, der vom Groben zum Feinen hin arbeitet und auf diese Weise die Wahrscheinlichkeit der Erkennung eines Musters und Ausgabe eines korrekten Ergebnisses erhöht. Dies ist dem menschlichen Gehirn nachgebildet, welches ähnlich arbeitet.

Künstliche Neuronale Netze lassen sich als Matrizen darstellen. Dies hat den Vorteil, dass die notwendigen Berechnungen recht einfach vorgenommen werden können. Eine Berechnung auf dem konventionellen Mikroprozessor, so auch eines Ventilators, ist möglich. Dies ermöglicht den intelligenten Ventilator ohne die Notwendigkeit eines Internetanschlusses.

Die künstlichen neuronalen Netze können verwendet werden, um den digitalen Zwillings-Algorithmus an die Produktvielfalt eines Herstellers und an unterschiedliche Kundenanwendungen im Betrieb anzupassen. Außerdem können künstliche neuronale Netze verwendet werden, um anhand von Fehlermustern den Ventilatorausfall zu prognostizieren. Dazu dienen mehrere zusammenhängende Faktoren, beispielsweise erhöhter Strom und erhöhte Elektroniktemperatur.

Es ist von Bedeutung, dass der Entwicklung moderner Ventilatoren ein digitaler Zwilling des Ventilators und die Anwendung eines digitalen Zwillings-Algorithmus zugrunde liegt. Aus dem Betrieb des Ventilators heraus werden Betriebszustände ermittelt und findet eine Regelanpassung und eine Beeinflussung der Lebensdauer statt. Die Innovations-Analyse und die Algorithmen-Analyse wird zum digitalen Zwillings-Algorithmus rückgekoppelt und sorgt für eine Verbesserung in Richtung "intelligenter" Ausführung des Algorithmus, mit dem weiteren Ziel, einen "intelligenten" Ventilator zu schaffen.

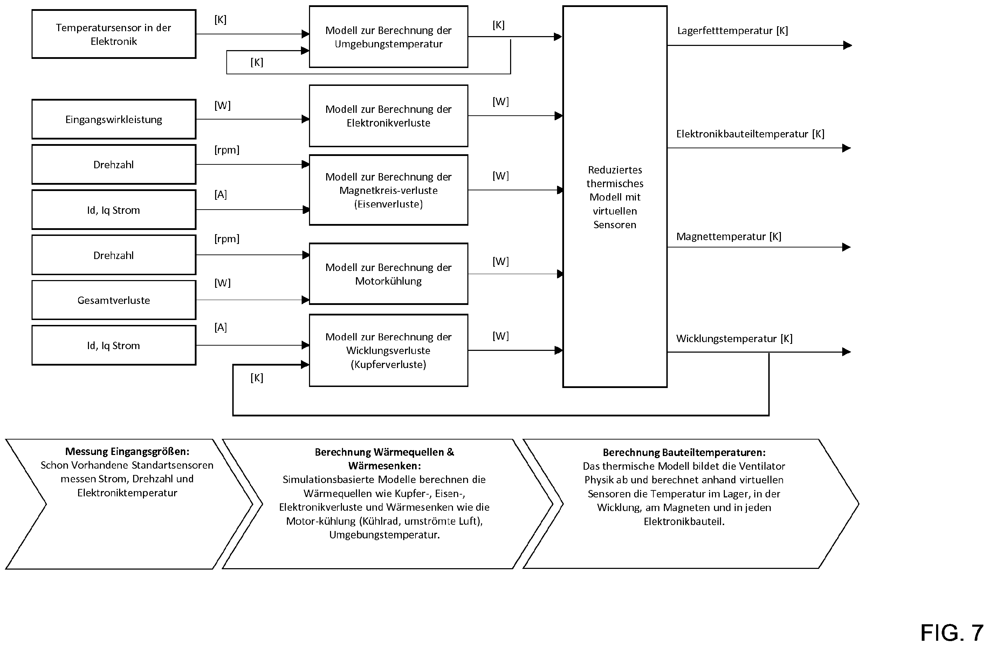

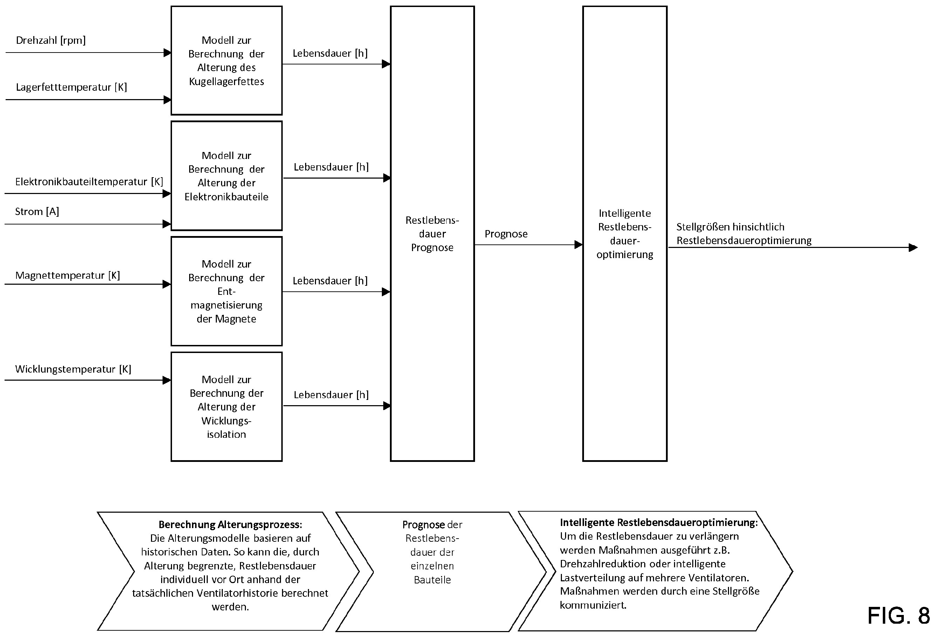

Die Darstellung in den **Figuren 7** **und** **8** dient zur weiterreichenden Erläuterung der beanspruchten Lehre.

Wesentlich ist die Nutzung eines digitalen Abbilds, nämlich eines digitalen Zwillings des Ventilators. Der digitale Zwilling entsteht per Datenverarbeitung. Er entsteht im Konkreten aus einer Kombination bekannter Eingangsgrößen oder Sensormesswerten mit berechneten Werten und Berechnungen/Modellen. Anhand des digitalen Zwillings erfolgt die Ermittlung von Bauteiltemperaturen, Strömen, Verlusten, etc. an bestimmten vorgegebenen Stellen des Ventilators. Anhand des digitalen Zwillings werden reale Werte wie beispielsweise konkrete Bauteiltemperaturen virtuell bestimmt, nämlich dann, wenn an der jeweiligen konkreten Stelle des Ventilators keine wirtschaftlich/konstruktiv sinnvolle Möglichkeit der Messung mittels Sensorik besteht.

Von weiterer Bedeutung für die beanspruchte Lehre ist der betriebsparameterspezifische Algorithmus. Anhand der Ergebnisse bzw. Daten, die der digitale Zwilling liefert, beispielsweise der Lagertemperatur, werden Kenngrößen wie beispielsweise eine Ausfallwahrscheinlichkeit oder verbrauchte Lebensdauer des Ventilators bzw. des Lagers des Ventilators bestimmt. Diese Kenngrößen sind abhängig von den aktuellen Betriebsparametern des Ventilators und deren Historie, d.h. in welchen Betriebspunkten und Umgebungen der Ventilator betrieben wird/wurde.

Die Figuren 7 und 8 verdeutlichen anhand eines konkreten Beispiels das erfindungsgemäße Verfahren zur Ermittlung von Betriebszuständen eines Ventilators unter Nutzung eines digitalen Abbildes des Ventilators unter Berücksichtigung der voranstehenden Ausführungen.

In der linken Spalte von Figur 7 stehen gemessene oder berechnete Eingangsgrößen inklusive der den Pfeilen zugeordneten Einheiten. Diese Eingangsgrößen werden über vorhandene Standardsensoren gemessen oder sind bekannt.

Aus diesen Eingangsgrößen werden Wärmequellen und Wärmesenken berechnet. Zugrunde gelegt werden simulationsbasierte Modelle, die die Wärmequellen wie beispielsweise Kupfer-, Eisen-, Elektronikverluste und Wärmesenken wie die Motorkühlung (Kühlrad, umströmte Luft und Umgebungstemperatur) berücksichtigen. Daraus resultieren Eingangsgrößen für ein reduziertes thermisches Modell mit virtuellen Sensoren. Dies alles entspricht dem digitalen Zwilling im Sinne eines thermischen Modells.

Aus dem reduzierten thermischen Modell mit virtuellen Sensoren werden Bauteiltemperaturen berechnet. Das thermische Modell bildet dabei die Ventilatorphysik ab und berechnet anhand virtueller Sensoren die Temperatur im Lager, in der Wicklung, am Magneten und in den verschiedenen Elektronikbauteilen, je nach Bedarf.

Figur 8 zeigt als Fortsetzung von Figur 7 deutlich, dass Ausgangsgrößen aus dem reduzierten thermischen Modell, gegebenenfalls mit weiteren Parametern, als Eingangsgrößen zur Berechnung des Alterungsprozesses herangezogen werden. Zugrundeliegende Alterungsmodelle basieren auf historischen Daten und können als Kennlinien hinterlegt sein. So kann die durch Alterung begrenzte Restlebensdauer individuell vor Ort anhand der tatsächlichen Ventilatorhistorie und des aktuellen Betriebszustands berechnet oder korrigiert werden.

Aus den jeweiligen Modellen zur Berechnung der Alterung resultiert eine berechnete Lebensdauer in Tagen oder Stunden, die, für sich gesehen, als bloße Information dienen kann. Die diesbezüglichen Informationen können dann zur weiterführenden Prognose herangezogen werden, nämlich zur Prognose der Restlebensdauer der einzelnen Bauteile oder des gesamten Ventilators. Diese Prognose kann dann zur intelligenten Restlebensdauer-Optimierung genutzt werden. Um die Restlebensdauer zu verlängern können Maßnahmen ausgeführt werden, beispielsweise eine Reduktion der Drehzahl oder eine intelligente Lastverteilung auf mehrere Ventilatoren. Diese Maßnahmen können durch eine Stellgröße kommuniziert werden.

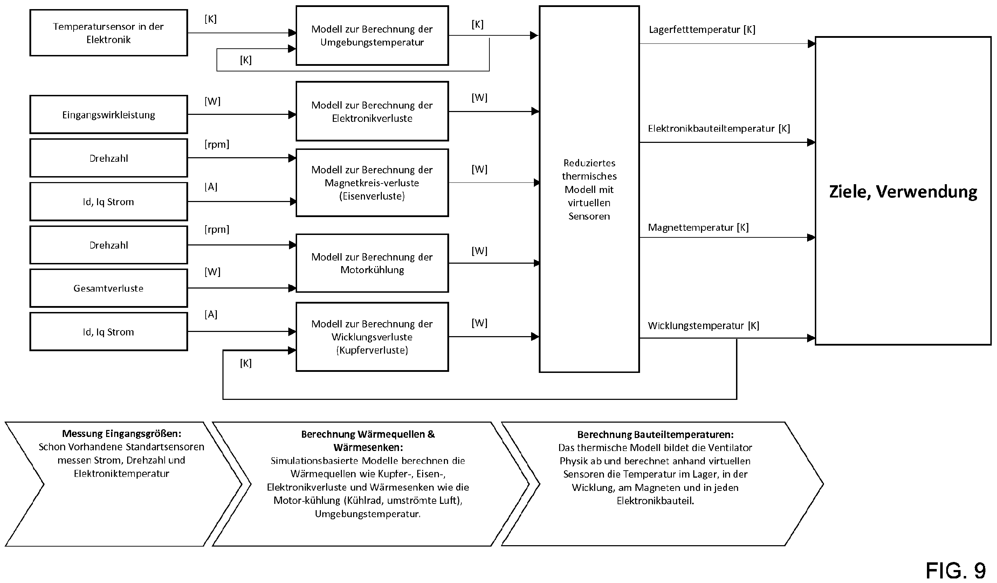

**Figur 9** zeigt noch einmal den digitalen Zwilling bis hin zum reduzierten thermischen Modell mit virtuellen Sensoren, wobei dadurch der Ventilator nebst Motor abgebildet wird. Wie bereits zuvor ausgeführt, bildet das thermische Modell die Ventilatorphysik ab und berechnet anhand virtueller Sensoren verschiedene Temperaturen, die zu unterschiedlichen Zwecken/Zielen/Verwendungen herangezogen werden, in Stichworten beispielsweise:
- **zur Überwachung:** Ermittlung von Betriebsparametern mit Hilfe von virtuellen Sensoren und Nutzung dieser zur Überwachung. Dies können sein: Warnmeldungen, Status-LEDs, Kommentare in einem auslesbaren Fehler-Code, Abbildungen in Cloud oder App-Anwendung, Darstellung in User-Interfaces.
- **zu Predictive Maintenance:** Verfahren zur Ermittlung der Alterung eines Ventilators, bestehend aus zahlreichen Teilsystemen, wie Kugellager, Wicklung, Elektronikbauteile, Magnete und Prognose der Restlebensdauer. Nutzung zur z.B. Planung von Wartungsintervallen, zur Erreichung einer möglichst langen Lebensdauer bevor Wartungsintervall (d.h. kein zu frühes Warten), automatische Terminplanung von Wartungsterminen, Meldung von Wartungsnotwendigkeit, automatische Bestellung von Ersatzteilen.
- **zur Optimierung:** Verfahren zur Ermittlung von Betriebszuständen die Produktperformance betreffend, d.h. Wirkungsgrad, Bauteiltemperaturen, Drehzahl, Ausgangsleistung, Volumenstrom, Lautstärke, Schwingungen, etc.
- **zur Schaffung eines intelligenten Ventilators:** Reaktion auf bestimmte Betriebszustände zur Verbesserung des Verhaltens oder zur Erreichung bestimmter Ziele.
   - Veränderung des Betriebspunktes/Veränderung der Regelparameter für optimalen Wirkungsgrad.
   - Veränderung des Betriebspunktes um möglichst lange Lebensdauer zu erreichen.
   - Verringerung der Drehzahl, wenn Ausfallwahrscheinlichkeit sehr hoch ist:
   - Veränderung des Betriebspunktes bei Tag-Nacht-Rhythmus für möglichst leise Nachtanwendung.
   - Ausgabe einer Stellgröße für Zusatzgeräte oder Kundengeräte, z.B. Temperaturausgabe zur Nutzung in Regelung einer Wärmepumpe, oder für eine zusätzliche Kühlung.
   - Gezielte Umgehung kritischer Systemzustände (z.B. Resonanzen, Übertemperaturen, etc.).

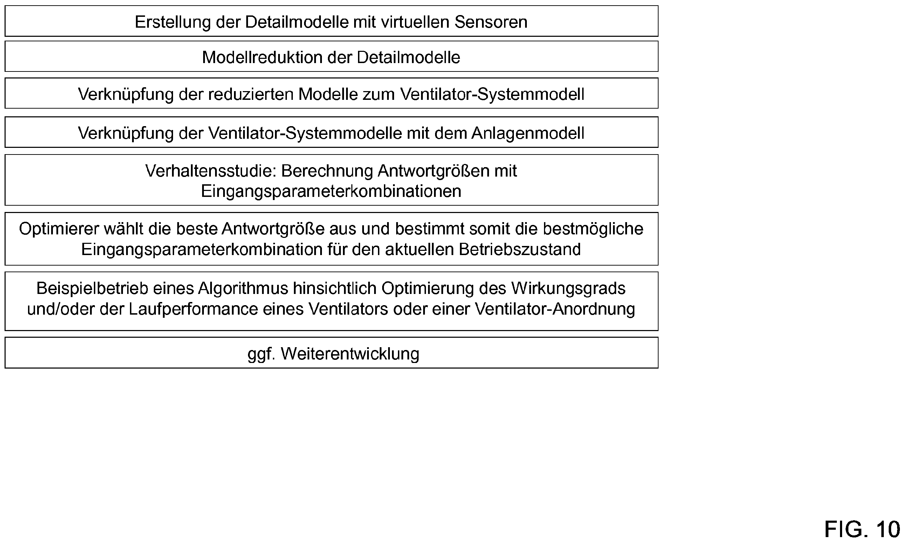

Zum besseren Verständnis der erfindungsgemäßen Lehre sind einerseits die Reihenfolge der Verfahrensschritte und andererseits deren Inhalte von Bedeutung. Die Reihenfolge der jeweiligen Verfahrensschritte lässt sich aus dem Entwicklungsworkflow des zugrundeliegenden Algorithmus ableiten. Dieser ist in Figur 10 gezeigt, wobei in einem letzten Schritt eine Weiterentwicklung des Verfahrens erfolgen kann.

Zur Schaffung eines Detailmodells ist grundsätzlich folgendes relevant:
Ein Modell ist ein Abbild oder eine Approximation an die Realität, das heißt definitionsgemäß eine Annäherung. Ein Modell beschränkt sich immer auf einen Ausschnitt, der für die angestrebte Abbildung von Interesse ist. Außerdem ist ein Modell grundsätzlich nicht vollständig, da es entweder für die einfachere Verwendung in Bezug auf dessen notwendige Eingabegrößen reduziert wird, oder einzelne physikalische Verhaltenselemente bei der Modellerstellung nicht bekannt sind. Abhängig von der späteren Nutzung und Zielsetzung ist eine andere Art Modellbildung notwendig, d.h. zum Beispiel eine anderer betrachteter Bereich, eine notwendige andere Genauigkeit in den Ergebnissen oder Schnelligkeit der Berechnung. Es gibt sehr viele Arten von Modellen, wobei im technischen Bereich meist ein Modell mit einer mathematischen Darstellung verbunden wird, beispielsweise mit algebraischen Gleichungen oder Ungleichungen, Systemen gewöhnlicher oder partieller Differentialgleichungen, Zustandsraumdarstellungen, Tabellen, Graphen.

Fester Bestandteil in der heutigen Produktentwicklung ist die virtuelle Produktentwicklung unter Verwendung der FE-Simulation (Finite Elemente Simulation). Klassischerweise wird hier eine physikalische Domäne (z.B. Festigkeit oder Thermik oder Magnetkreis) in einem sehr großen (Größenordnung 100 Gigabyte) und rechenintensiven Modell abgebildet und die Ergebnisse an Millionen Stellen (Knoten) im Modell bestimmt. Dies ist eine Variante von Detailmodellen. Der grobe Ablauf in der Erstellung dieser Detailmodelle lässt sich wie folgt skizzieren:
1. Import einer 3D-Geometrie zum Beispiel aus dem Bereich der CAD,
2. Zuweisung von Randbedingungen, d.h. feste Einspannungen, Materialdefinitionen, Kontaktbedingungen (Klebestellen, gleitende Verbindungen, Wärmeisolation),
3. Vernetzung (Auftrennen der Geometrie in Millionen kleine Elemente, die verknüpft sind,
4. Aufbringen der Belastung, also Kräfte, Wärmequellen-/senken, magnetische Felder,
5. Automatisches Lösen der sich ergebenden Differentialgleichungen für jedes einzelne Element und Zusammenfügen zu einem großen Ergebnis für das Gesamtmodell,
6. Bewertung der Ergebnisse.

Die Erstellung von Detailmodellen mit virtuellen Sensoren in Bezug auf Ventilatoren/Gesamtsysteme mit Ventilatoren ergibt sich wie folgt:
Es werden Detailmodelle mit dem Ziel erstellt, die Physik des Ventilators und/oder des Gesamtsystems abbilden zu können. Sogenannte virtuelle Sensoren sind definierte Berechnungspunkte in den Detailmodellen. Diese virtuellen Sensoren berechnen Bauteilzustände, beispielsweise die Wicklungstemperatur im thermischen Detailmodell des Ventilators. Detailmodelle sind Simulationsmodelle, die in Bezug auf die Rechenzeit, die benötigte Recheneleistung und den Speicherbedarf aufwändig sind. Solche detaillierten Modelle wie beispielsweise thermische Modelle, Magnetkreismodelle, Elektronikmodelle, Regelmodelle, Kraftmodelle oder Schwingungsmodelle dienen zur Berechnung nicht linearer Betriebszustände. Die physikalischen Effekte des Systems beinhalten Wechselwirkungen zwischen den Domänen, weshalb die einzelnen Modelle gekoppelt im Gesamtsystem betrachtet werden müssen. Berechnungen mit Detailmodellen im Gesamtsystem sind hinsichtlich Rechenzeit nicht praktikabel, da Wechselwirkungen nicht in Echtzeit ausgewertet werden können. Eine Modellreduktion ist daher erforderlich.

Die Erzeugung von reduzierten Modellen kann sich wie folgt vollziehen:
Eine Modellreduktion beschreibt ganz allgemein ein bereits bestehendes Modell, um weitere Informationen zu reduzieren, um es zum Beispiel auf Speicherbedarf oder Rechengeschwindigkeit zu optimieren. Hier gibt es abhängig vom konkreten Anwendungsfall viele Varianten wie zum Beispiel:
▪ Annäherung von einfachen mathematischen Funktionen, wie zum Beispiel Polynomfunktionen und lediglich Abspeichern der Koeffizienten.
▪ Ablegen von Tabellen für verschiedene Eingangsgrößen und anschließend entweder Verwendung von diesen diskreten Werten oder Interpolation zwischen den Werten.
▪ Annäherung von statistischen Modellen, die Prognosen aus bisherigen Werten liefern.
▪ Graphen/logische Gatter, Beispiel: Wenn T>200°C, dann Ventilator defekt.

### Erzeugung der reduzierten Modelle - Beispiel a)

Ausgangspunkt für das reduzierte Modell ist ein FE-Modell der Thermik, das abhängig von Wärmeeingang und Wärmeausgang die Temperaturen in jedem Punkt des Modells abbildet. Im folgenden Beispiel wird die Modellreduktion auf lediglich einen Wärmeeingang und einen Wärmeausgang, nur eine zu bestimmende Temperatur an der Stelle A und nur jeweils die Werte "hoch" und "niedrig" vereinfacht. Hierzu wird eine Parameterstudie durchgeführt, wodurch diese sogenannte "Look-Up-Tabelle" ermittelt wird:

| Temperatur an der Stelle A | Wärmeeingang = Niedrig = 1W | Wärmeeingang = Hoch = 11W |
|---|---|---|
| Wärmeausgang= Niedrig = 1W | 40°C | 80°C |
| Wärmeausgang = Hoch = 5W | 20°C | 60°C |

Anschließend gibt es mehrere Möglichkeiten die Ergebnisse zu verwenden.
▪ Verwendung der Tabelle direkt und diskret. Beispiel: Wenn eine Temperatur an der Stelle A für einen Wärmeeingang von 4W und Wärmeausgang von 1W prognostiziert werden soll, wird direkt der Wert von 40°C übernommen.
▪ Verwendung der Tabelle und lineare Interpolation zwischen den Werten. Beispiel: Wenn eine Temperatur an der Stelle A für einen Wärmeeingang von 5W und Wärmeausgang von 1W prognostiziert werden soll, wird der Wert von 60°C über lineare Interpolation bestimmt.
▪ Verwendung der Tabelle zur Bestimmung einer Temperaturprognosefunktion mittels Regression. Beispiele für Zielfunktionen sind Polynomfunktionen, lineare Funktionen, Exponential-Funktionen, statistische Funktionen, Differentialgleichungen, etc. Anschließend Bestimmung der Temperatur mit Hilfe dieser Funktion.

### Erzeugung der reduzierten Modelle - Beispiel b)

Ausgangspunkt für das reduzierte Modell ist ein FE-Modell der Thermik, das abhängig von Wärmeeingang und Wärmeausgang die Temperaturen in jedem Punkt des Modells abbildet. Im Anschluss darauf können mit mathematischen Annahmen, Berechnungen und Umformungen (zum Beispiel LTI-System oder Krylov-Unterraum-Verfahren) kompakte Zustandsraummodelle angenähert werden. Diese bestehen aus zwei wesentlichen Differential- bzw. Integralgleichungen und vier, das gesamte System beschreibenden, Matrizen (zum Beispiel 200x200 Matrizen gefüllt mit skalaren Zahlenwerten). Diese stellen jedoch nicht mehr die Temperatur an Millionen Knoten dar, sondern nur an wenigen ausgewählten Stellen. Außerdem kommt es durch die Näherung zu einer Abweichung der Ergebnisse abhängig von der Größe des Zustandsraummodells. Grundsätzlich gilt je größer das Modell und seine Matrizen, desto geringer die Abweichung.

Zustandsraummodelle sind als Prozeduren, Module oder Objekte in vielen Computer-Algebra-Programmen wie zum Beispiel Matlab oder auch in Programmiersprachen standardmäßig vorhanden, wodurch derartige Modelle durch simplen Import der Matrizen berechnet werden können. Eingangsgrößen sind hier zum Beispiel Wärmeleistung die in das System eingeht und Wärmesenken durch Konvektion, Ausgangsgrößen sind zum Beispiel bestimmte Bauteiltemperaturen (z.B. drei verschiedene Bauteiltemperaturen).

### Erzeugung der reduzierten Modelle - Beispiel c)

Ausgangspunkt für die Modellreduktion sind in diesem Beispiel experimentelle Ergebnisse. Hier würde ebenso wie in Beispiel a) eine Tabelle aus Messergebnissen erstellt werden und anschließend äquivalent dazu damit weiterfahren werden (diskrete Verwendung, lineare Interpolation oder Regression mittels mathematischer Funktionen).

Von weiterer Bedeutung kann eine Kopplung von physikalischen Domänen oder verschiedenen Modellen sein.

Klassischerweise werden in der virtuellen Produktentwicklung Domänen einzeln betrachtet, da eine gemeinsame Betrachtung sehr rechen- und speicheraufwendig und kaum praktikabel ist. Durch die Modellreduktion ergibt sich die Möglichkeit, die Modelle verschiedener Domänen zu koppeln. Zum Beispiel ist die Kopplung eines detaillierten Magnetkreismodells, dessen Rechenzeit auf einem leistungsstarken Rechencluster mehrere Tage bis Wochen beträgt, mit einem thermischen Modell nicht von Vorteil. Diese ist in vielen Fällen zur möglichst genauen Abbildung des realen Verhaltens notwendig.

Kopplung von physikalischen Domänen oder verschiedenen Modellen - Beispiele
▪ Der Wicklungswiderstand ist näherungsweise linear abhängig von der Temperatur des Kupfers. Abhängig vom Wicklungswiderstand ändert sich die Verlustleistung in der Wicklung näherungsweise linear. Abhängig von der Verlustleistung ändert sich das thermische Verhalten, zum Beispiel Wicklungs- und Lagertemperatur stark nicht-linear, was sich wiederum auf den Wicklungswiderstand auswirkt. Hier ist somit je nach Anforderung an die Ergebnisse des Modells eine Kopplung notwendig.
▪ Das notwendige Drehmoment und die Drehzahl eines Ventilators sind stark abhängig vom Anlagenwiderstand und zum Beispiel Druckdifferenz und Temperatur des Fördermediums. Abhängig vom Lastmoment ändert sich das Verhalten des Magnetkreises, d.h. Ströme durch die Wicklung, magnetisches Feld, Drehzahl, etc. Abhängig davon ändern sich dann auch Leistungsaufnahme, Verluste und erreichbare Drehzahl. Auch hier ist im Falle einer Kundenanwendung die Kopplung des Ventilatorverhaltens mit der Einbausituation je nach Anwendungsfall vorstellbar.

Konkretisierung einer technischen Umsetzung - Beispiel a)
▪ Erstellung eines thermischen FE-Modells eines Ventilators →Rechenintensives und speicherintensives FE-Modell mit 1.000.000 Elementen zusätzlich zur Polynomfunktion. Wärmequellen und -senken sind als Polynomfunktionen abhängig von Eingangsstrom und Drehzahl abgebildet.
▪ Erstellung eines reduzierten thermischen Modells über statistische Methoden, das die Elektronikbauteiltemperatur abhängig von Eingangsstrom und Drehzahl abbildet. → Polynomfunktion, die Temperatur abhängig von Eingangsstrom und Drehzahl beschreibt = virtueller Temperatursensor.
▪ Kennlinie aus Datenblatt zur Lebensdauer des Elektronikbauteiles abhängig von seiner Temperatur → Betriebsparameterspezifischer Algorithmus, der aus virtuellem Temperatursensor die Ausfallwahrscheinlichkeit berechnet.
▪ Nutzung für Predictive Maintenance, zur Überwachung oder zur Optimierung des Betriebspunktes → Intelligenter Algorithmus.

Konkretisierung einer technischen Umsetzung - Beispiel b)
▪ Erfassung von Stromzeiger und Motordrehzahl durch integrierte Elektronik/ Regelung. Daraus wird der elektromagnetische Arbeitspunkt abgeleitet.
▪ Anhand dieses Arbeitspunktes ergeben sich über Look-Up-Tabellen oder Polynomfunktionen die Verluste von Motor und Leistungselektronik.
▪ Ein thermisches Modell verarbeitet die Verlustwerte und ermittelt Temperaturen kritischer Systembestandteile wie Kugellager oder Halbleiterbauteile.
▪ Gleichzeitig werden über einen realen Sensor Bauteilschwingungen aufgezeichnet. Die lokalen Schwingungen werden durch Verhaltensmodelle auf das Gesamtsystem virtuell projiziert, wodurch zum Beispiel die Lagerbelastung aufgrund von Schwingungen abgeschätzt wird.
▪ Mithilfe betriebsparameterspezifischer Algorithmen werden ermittelte Temperaturen und Schwingwerte in eine Abschätzung der Bauteil- und Ventilatorlebensdauer umgerechnet.
▪ Weitergreifende Maßnahmen wie die Predictive Maintenance können dadurch ermöglicht werden.
▪ Gleichzeitig kann mit der Kenntnis der Verluste der Arbeitspunkt und der Systemwirkungsgrad durch regelungstechnische Anpassungen, wie zum Beispiel die Variation des Vorsteuerwinkels optimiert werden.

Im Rahmen einer Anwendung bei Ventilatoren und/oder Ventilatorsystemen gelten die voranstehenden Ausführungen zur Modellreduktion der Detailmodelle, wobei eine Ordnungsreduktion mittels der Krylov-Unterraummethode erfolgen kann. Das Ziel ist die Minimierung der Rechenzeit, der benötigten Rechenleistung und des Speicherbedarfs, so dass eine Berechnung in Echtzeit möglich ist. Die virtuellen Sensoren bleiben erhalten und liefern Ausgangsgrößen.

Gemäß **Figur 10** werden in einem nächsten Schritt die reduzierten Modelle zum Ventilator-Systemmodell verknüpft. Im Konkreten werden die reduzierten Modelle wie das thermische Modell, das Magnetkreismodell, das Softwaremodell, das Elektronikmodell, etc. zu einem Ventilator-Systemmodell verknüpft. Das Ventilator-Systemmodell bildet die Physik des einzelnen Ventilators oder einer Ventilatorgruppe oder eines Ventilatorssystems ab und berechnet abhängig von den Umgebungsbedingungen und Betriebszuständen den Wirkungsgrad, die Laufperformance und etwaige Wechselwirkungen zwischen den einzelnen Modellen.

In einem nächsten Schritt findet eine Verknüpfung der Ventilator-Systemmodelle mit dem Anlagenmodell statt, wodurch ein Gesamtsystemmodell entsteht. Das Gesamtsystemmodell besteht aus mehreren Ventilatoren und einer Anlage, beispielsweise umfassend einen Verdichter und/oder Verflüssiger. Das Anlagenmodell kann mit dem gleichen Workflow wie das Ventilator-Systemmodell realisiert werden. Anschließend lassen sich die Ventilator-Systemmodelle und das Anlagenmodell zu einem Gesamtsystemmodell verknüpfen.

Ein nächster Schritt umfasst eine Verhaltensstudie, nämlich die Berechnung von Antwortgrößen mit Eingangsparameterkombinationen.

Ziel der Studie ist es, das Verhalten des Gesamtsystemmodells zu bestimmen und mit diesem Wissen das System in Echtzeit zu regeln.

Gemäß Gesamtsystemverhalten werden Wirkungen und Einflüsse von Modelleingangsgrößen auf die Modellantwortgrößen im Designraum übertragen bzw. abgebildet.

Der Designraum ist ein mehrdimensionaler Raum, der von den möglichen Eingangsgrößen aufgespannt wird. Die Anzahl der Eingangsgrößen entspricht der Dimension des Designraums. Dies bedeutet bei zehn Eingangsgrößen zehn Dimensionen.

Die Modelleingangsgrößen werden in definierten Grenzen variiert. Dadurch entstehen Parameterkombinationen, die den mehrdimensionalen Raum gleichmäßig abdecken und dadurch beschreiben. Die Modellantwortgrößen wie Wirkungsgrad und Laufperformance werden anhand der Parameterkombinationen berechnet. Die Verhaltensstudie liefert einen Designraum, der mit Antwortgrößen in Abhängigkeit der Eingangsgrößen gefüllt ist. Dieser Raum bildet das Gesamtsystemverhalten ab.

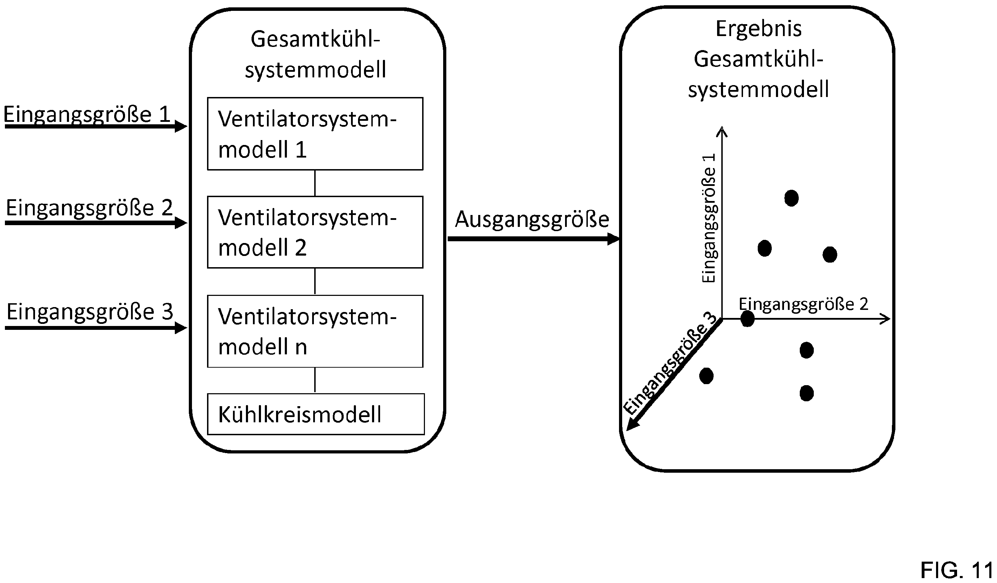

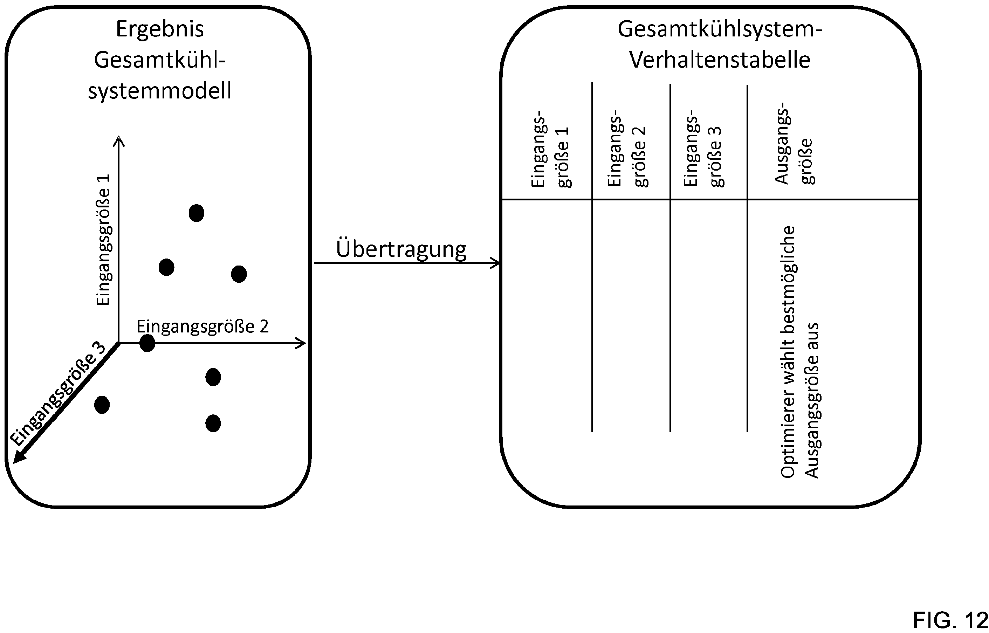

**Figur 11** zeigt, wie verschiedene Eingangsgrößen in Ventilatorsystemmodelle und Kühlkreismodelle einfließen, wodurch sich das Gesamtkühlsystemmodell ergibt. Eine entsprechende Ausgangsgröße ist als Ergebnis des Gesamtkühlsystemmodells zu verstehen. Das daraus resultierende Wissen kann gemäß **Figur 12** in eine Verhaltenstabelle überführt werden. Wenn das Gesamtsystemverhalten bekannt ist, lassen sich die Eingangsgrößen anpassen, um eine bestmögliche Antwortgröße zu verhalten.

Das Anpassen oder die Auswahl der Antwortgröße und der dazugehörigen Eingangsgrößenkombination aus der Verhaltenstabelle wird durch einen Optimierer realisiert, nämlich gemäß dem in Figur 10 aufgezeigten weiteren Verfahrensschritt, wonach der Optimierer die beste Antwortgröße auswählt und somit die bestmögliche Eingangsparameterkombination für den aktuellen Betriebszustand wählt.

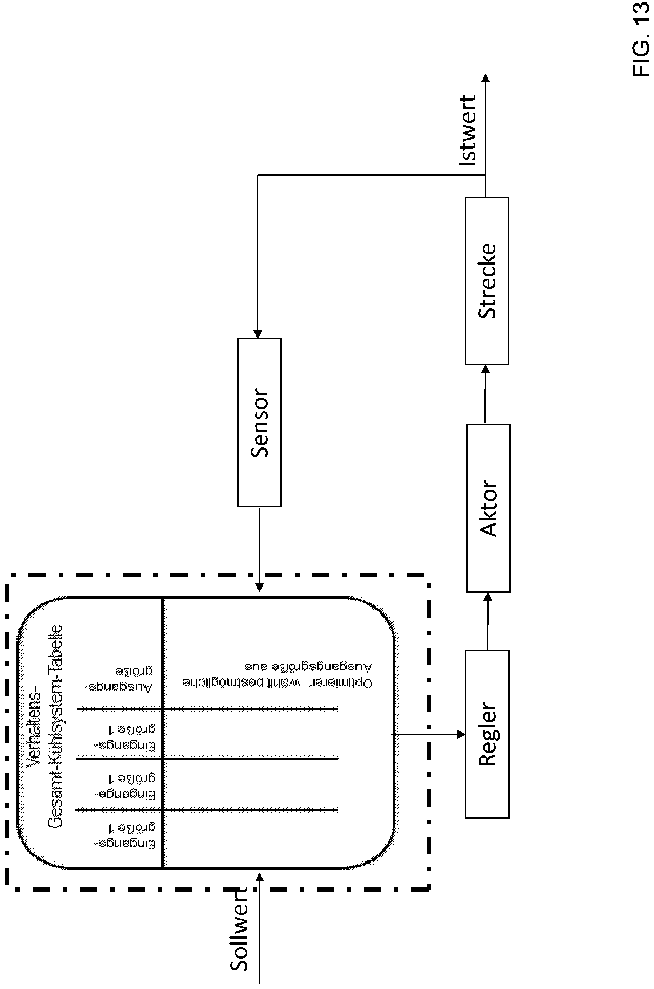

Gemäß der Darstellung in **Figur 13** wählt der Optimierer die beste Antwortgröße aus und bestimmt die bestmögliche Eingangsparameterkombination für den aktuellen Betriebszustand. Mit anderen Worten wählt der Optimierer je nach Umgebungsbedingung/Betriebszustand die bestmögliche Modellantwort aus. Die dazugehörigen Parameterkombinationen der Eingangsgrößen werden eingestellt. Somit lässt sich das System bestmöglich regeln. Die Gesamtkühlsystem-Verhaltenstabelle kann auf einem beliebigen Prozessor laufen, vorzugsweise auf einem Mikroprozessor des Ventilators, der ohnehin vorhanden ist. Eine Regelung ist so möglich.

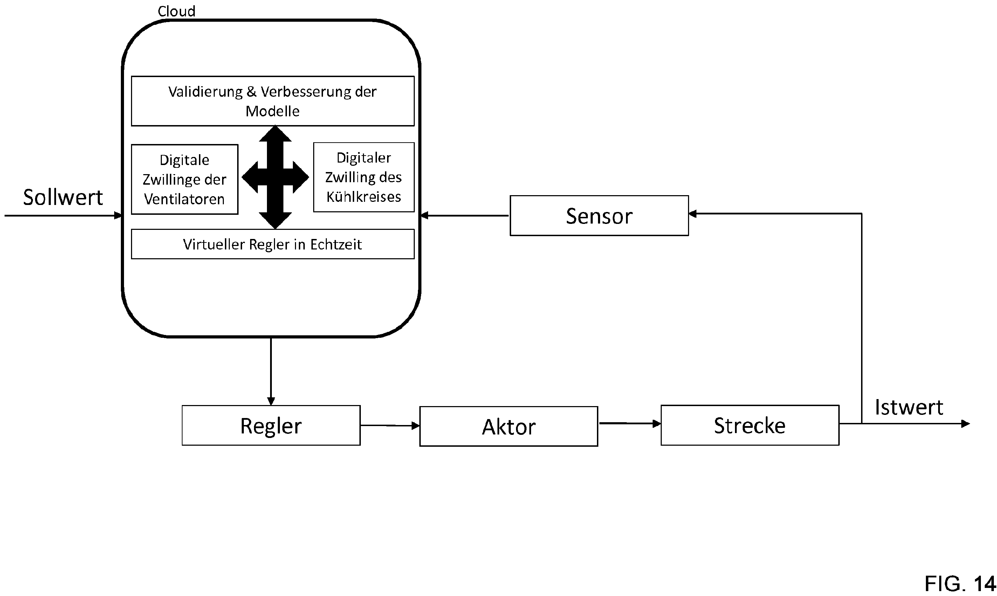

**Figur 14** bezieht sich auf eine etwaige Weiterentwicklung, wonach die Gesamtkühlsystem-Verhaltenstabelle gemäß der Darstellung in Figur 13 durch eine System-Simulation des Kühlkreises in einer Cloud erweitert wird. Das System umfasst digitale Zwillinge des Ventilators, digitale Zwillingen des Kühlkreises, eine Validierungseinheit und einen virtuellen Regler/Optimierer.

Die digitalen Zwillinge des Ventilators und des Kühlkreises bilden das System physikalisch ab. Der virtuelle Regler verfügt über das Wissen der Gesamtkühlsystem-Verhaltenstabelle gemäß der Darstellung in Figur 13. Außerdem kann der virtuelle Regler durch maschinelles Lernen dazulernen, beispielsweise bezogen auf die spezifischen Kundenanwendungen. Die Validierungseinheit verbessert die digitalen Zwillinge durch den Vergleich von Sollwert und Istwert. So besitzt das System die Fähigkeit, spezifische Kundenmuster zu simulieren und sich aus den daraus resultierenden Kenntnissen zu verbessern.

Gemäß der Merkmalskombination nach Anspruch 1 ist die Innovationsanalyse von besonderer Bedeutung. Ziel der Innovationsanalyse ist die Verbesserung des Wirkungsgrads, der Laufperformance und eine Reduktion von Materialkosten durch Wissen aus der Kundenanwendung. Digitale Abbilder im realen Kundenbetrieb werden gesammelt. Durch Mustererkennung, gegebenenfalls unter Nutzung von KI (KI = Künstliche Intelligenz, maschinelles Lernen), werden die charakteristischen Eigenschaften des Kundenbetriebs herausgefiltert und erkannt. Anhand der charakteristischen Eigenschaften aus dem Kundenbetrieb wird ein Kundenmodell erstellt. Mittels künstlicher Intelligenz erfolgt eine Analyse des Modells in Bezug auf Schwächen.

Ein Beispiel für eine solche Schwäche ist der Betrieb des Ventilators in einem Bereich, in dem die Entwärmung nicht optimal ist. Im Vergleich zu Katalogmessungen ist der Wirkungsgrad abgesunken. Nach Erkennung solcher Schwächen liegt das Optimierungsziel in der Steigerung des Wirkungsgrads im Kundenarbeitspunkt. Der Optimierer verwendet das Detailmodell des Ventilators und das Kundenmustermodell zur Optimierung. Das Ergebnis der Optimierung kann beispielsweise eine Wicklungsanpassung und/oder eine Geometrieanpassung zur verbesserten Entwärmung des Ventilators sein.

**Figur 15** zeigt einen Workflow, der autonom in der/einer Cloud stattfindet.

**Figur 16** bezieht sich auf die Algorithmenanalyse in der Cloud.

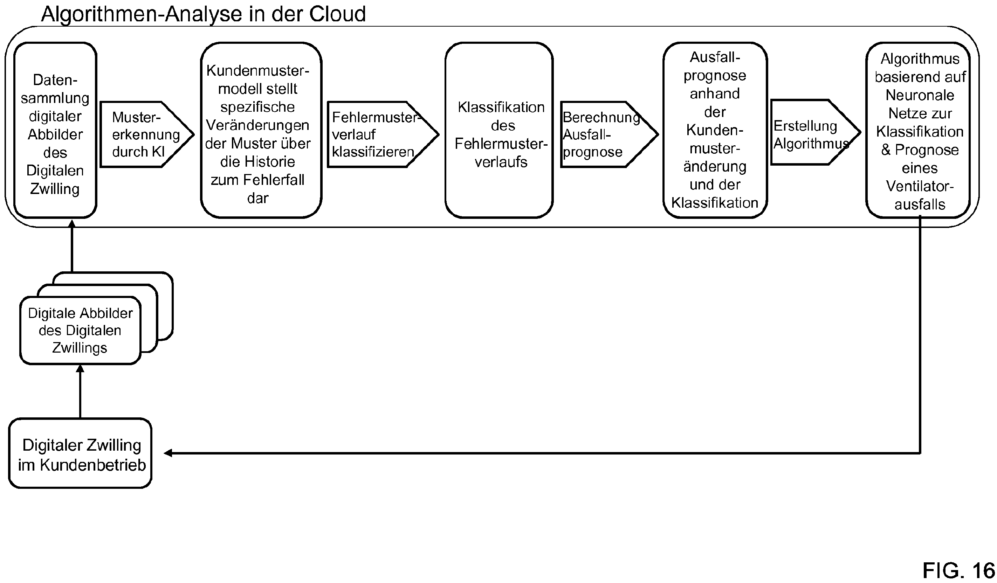

Ziel der intelligenten Algorithmen ist die Verbesserung und Neuentwicklung von Algorithmen zur Klassifikation und Prognose eines Ventilatorausfalls. Digitale Abbilder werden im realen Kundenbetrieb gesammelt. Die künstliche Intelligenz erstellt aus den gesammelten Daten ein Muster und erkennt spezifische Veränderungen in dem Muster über die Historie bis hin zum Fehlerfall. Anhand der Veränderungen der Muster kann ein Fehlerfall klassifiziert und eine Prognose des Ausfalls erstellt werden. Diese wird in einen Algorithmus umgesetzt, regelmäßig basierend auf neuronalen Netzen bzw. selbstlernenden Systemen. Der Algorithmus wird nach Verbesserung oder Neuerstellung in den Kundenbetrieb übertragen, wobei die Verbesserung zyklisch bzw. periodisch erfolgen kann. Der Workflow findet automatisiert in der Cloud entsprechend der Darstellung in Figur 16 statt.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränkt.

## Patentansprüche

1. Verfahren zum optimierten Betrieb eines Ventilators oder einer Ventilatoranordnung, wobei unter Nutzung eines digitalen Abbildes des Ventilators bzw. der Ventilatoranordnung und mindestens eines betriebsparameterspezifischen Algorithmus, deren Kombination einen digitalen Zwillings-Algorithmus bilden, die im Betrieb gewonnenen Daten und Erkenntnisse einer Innovations- und Algorithmen-Analyse zugeführt werden, so dass einerseits Produktinnovationen, nämlich ein verbesserter Ventilator bzw. eine verbesserte Ventilatoranordnung, und andererseits verbesserte intelligente Algorithmen generiert werden,
wobei bei der Innovationsanalyse digitale Abbilder im realen Kundenbetrieb gesammelt werden und durch Mustererkennung die charakteristischen Eigenschaften des Kundenbetriebs herausgefiltert und erkannt werden, wobei anhand der charakteristischen Eigenschaften aus dem Kundenbetrieb ein Kundenmodell erstellt wird und wobei mittels künstlicher Intelligenz eine Analyse des Modells in Bezug auf Schwächen erfolgt,
wobei die Algorithmen-Analyse ein Programm zum maschinellen Lernen nutzt zur künstlichen Generierung von Wissen aus Erfahrungen im Betrieb des Ventilators bzw. der Ventilatoranordnung,
wobei thermische und mechanische Bauteilzustände des Ventilators bzw. der Ventilatoranordnung über den digitalen Zwillings-Algorithmus während des Betriebs des Ventilators mittels virtueller Sensoren berechnet werden,
wobei der betriebsparameterspezifische Algorithmus aus den Bauteilzuständen konkrete Betriebsparameter des Ventilators bzw. der Ventilatoranordnung ermittelt,
wobei Kenngrößen des Ventilators unter Zugrundelegung berechneter Bauteilzustände und daraus resultierender Betriebsparameter berechnet werden,
und wobei die Verbesserung der Algorithmen zur optimierten Berechnung der Lebensdauer und/oder zur Optimierung des Betriebs und/oder zur bestmöglichen Prognose für die Wartung der Ventilatoren bzw. der Ventilatoranordnungen genutzt wird.

2. Verfahren nach Anspruch 1, **dadurch gekennzeichnet, dass** bauteil- oder funktionsspezifische numerische Detailmodelle genutzt werden, die im Wege einer Modell- und Datenreduktion, ggf. einer Datenveredelung, zu bauteil- oder funktionsspezifischen Verhaltensmodellen gewandelt und in einer Systemsimulation zu einem System-Verhaltensmodell mit Eingangs- und Ausgangsgrößen gekoppelt bzw. kombiniert werden, die Eingangsgrößen und zugehörigen Ausgangsgrößen des Ventilators bzw. der Ventilatoranordnung aus dem System-Verhaltensmodell einem Optimierer zur Auswahl zur Verfügung zu stellen.

3. Verfahren nach Anspruch 1 oder 2, **dadurch gekennzeichnet, dass** die berechneten Bauteilzustände der jeweiligen Algorithmen-Analyse vorzugsweise über die/in der Cloud zugeführt werden.

4. Verfahren nach einem der Ansprüche 1 bis 3, **dadurch gekennzeichnet, dass** aus Lerndaten, die durch Beispiele der Zustände des digitalen Zwillings-Algorithmus gewonnen werden, Muster und Gesetzmäßigkeiten abgeleitet werden.

5. Verfahren nach einem der Ansprüche 1 bis 4, **dadurch gekennzeichnet, dass** die Innovations-Analyse Auskunft über den Bedarf des Betreibers des Ventilators bzw. der Ventilatoranordnung liefert.

6. Verfahren nach einem der Ansprüche 1 bis 5, **dadurch gekennzeichnet, dass** die Innovations-Analyse Innovationen in Bezug auf individuell an den Kunden angepasste Ventilatoren bzw. Ventilatoranordnungen liefert.

7. Verfahren nach einem der Ansprüche 1 bis 6, **dadurch gekennzeichnet, dass** die Innovations- und Algorithmen-Analyse ständig durchgeführt wird.

## Claims

1. Method for optimised operation of a fan or a fan arrangement, wherein using a digital image of the fan or the fan arrangement and at least one operating-parameter-specific algorithm, whose combination forms a digital twin algorithm, the data and knowledge obtained during operation are supplied to an innovation and algorithm analysis so that, on the one hand, production innovations, that is to say, an improved fan or an improved fan arrangement, and, on the other hand, improved intelligent algorithms are generated,
wherein with the innovation analysis digital images are collected during real client operation and by means of pattern recognition the characteristic properties of the client operation are filtered out and identified, wherein with reference to the characteristic properties from the client operation a client model is produced and wherein by means of artificial intelligence an analysis of the model with respect to weaknesses is carried out,
wherein the algorithm analysis uses a program for machine learning for artificial generation of knowledge from experience during operation of the fan or the fan arrangement, wherein thermal and mechanical component states of the fan or the fan arrangement are calculated via the digital twin algorithm during operation of the fan by means of virtual sensors,
wherein the operating-parameter-specific algorithm establishes from the component states specific operating parameters of the fan or the fan arrangement,
wherein characteristic variables of the fan are calculated taking as a basis calculated component states and resulting operating parameters, and wherein the improvement of the algorithms is used for optimum calculation of the servicelife and/or in order to optimise the operation and/or best possible prognosis for the maintenance of the fans or the fan arrangements.

2. Method according to claim 1, **characterised in that** component or function-specific digital detailed models, which by way of a model and data reduction, where applicable a data enhancement, are converted into component or function-specific behaviour models and in a system simulation are coupled or combined with input and output variables to form a system behaviour model, are used to make available the input variables and associated output variables of the fan or the fan arrangement from the system behaviour model to an optimiser for selection.

3. Method according to claim 1 or 2, **characterised in that** the calculated component states of the respective algorithm analysis are preferably supplied via the/in the cloud.

4. Method according to any one of claims 1 to 3,
**characterised in that**, from learning data which are obtained by means of examples of the states of the digital twin algorithm, patterns and laws are derived.

5. Method according to any one of claims 1 to 4,
**characterised in that** the innovation analysis provides information relating to the requirement of the operator of the fan or the fan arrangement.

6. Method according to any one of claims 1 to 5,
**characterised in that** the innovation analysis provides innovations relating to fans or fan arrangements which are individually adapted to the client.

7. Method according to any one of claims 1 to 6,
**characterised in that** the innovation and algorithm analysis is carried out continuously.

## Revendications

1. Procédé pour le fonctionnement optimisé d'un ventilateur ou un dispositif de ventilateur, dans lequel, à l'aide d'une représentation numérique du ventilateur ou du dispositif de ventilateur et d'au moins un algorithme spécifique aux paramètres de fonctionnement, dont la combinaison constitue un algorithme de jumeau numérique, les données et informations obtenues lors du fonctionnement sont introduites dans une analyse d'innovation et d'algorithme, de sorte que, d'une part des innovations de produits, à savoir un ventilateur amélioré ou un dispositif de ventilateur amélioré et, d'autre part, des algorithmes intelligents améliorés sont générés,
dans lequel, lors de l'analyse d'innovation, des représentations numériques en fonctionnement réel chez le client sont collectées et, par la détection d'un motif, les propriétés caractéristiques du fonctionnement chez le client sont extraites et détectées, dans lequel, à l'aide des propriétés caractéristiques provenant du fonctionnement chez le client, un modèle de client est créé et dans lequel, à l'aide d'une intelligence artificielle, une analyse du modèle a lieu en ce qui concerne les points faibles,
dans lequel l'analyse d'algorithme utilise un programme pour l'apprentissage machine afin de générer artificiellement des connaissances à partir des expériences dans le fonctionnement du ventilateur ou du dispositif de ventilateur,
dans lequel les états des composants thermiques et mécaniques du ventilateur ou du dispositif de ventilateur sont calculés par l'intermédiaire de l'algorithme de jumeau numérique pendant le fonctionnement du ventilateur au moyen de capteurs virtuels,
dans lequel l'algorithme spécifique aux paramètres de fonctionnement provenant des états de composants détermine des paramètres de fonctionnement concrets du ventilateur ou du dispositif de ventilateur,
dans lequel des grandeurs caractéristiques du ventilateur sont calculés sur la base des états de composants calculés et des paramètres de fonctionnement qui en résultent,
et dans lequel l'amélioration des algorithmes est utilisée pour le calcul optimisé de la durée de vie et/ou pour l'optimisation du fonctionnement et/ou pour le meilleur pronostic possible pour la maintenance des ventilateurs ou du dispositif de ventilateur.

2. Procédé selon la revendication 1, **caractérisé en ce que** des modèles numériques détaillés spécifiques aux composants ou aux fonctions sont utilisés, qui sont convertis, au cours d'une réduction de modèle et de données, le cas échéant d'un enrichissement des données, en modèles de comportements spécifiques aux composants ou aux fonctions et, dans une simulation de système, couplés ou combinés en un modèle de comportement de système avec des grandeurs d'entrée et de sortie, afin de mettre à disposition d'un optimiseur, pour sélection, les grandeurs d'entrée les grandeurs de sortie correspondantes du ventilateur ou du dispositif de ventilateur provenant du modèle de comportement de système.

3. Procédé selon la revendication 1 ou 2, **caractérisé en ce que** les états de composants calculés sont introduits dans l'analyse d'algorithme respective de préférence par l'intermédiaire du cloud ou dans le cloud.

4. Procédé selon l'une des revendications 1 à 3, **caractérisé en ce que**, à partir des données d'apprentissage, qui sont obtenues par des exemples des états de l'algorithme de jumeau numérique, des motifs et des régularités sont déduites.

5. Procédé selon l'une des revendications 1 à 4, **caractérisé en ce que** l'analyse d'innovation fournit des renseignements concernant le besoin de l'utilisateur du ventilateur ou du dispositif de ventilateur.

6. Procédé selon l'une des revendications 1 à 5, **caractérisé en ce que** l'analyse d'innovation fournit des innovations concernant des ventilateurs ou des dispositifs de ventilateurs adaptés individuellement au client.

7. Procédé selon l'une des revendications 1 à 6, **caractérisé en ce que** les analyses d'innovation et d'algorithme sont effectuées en permanence.
